# EUROPÄISCHE PATENTSCHRIFT

(11) **EP 2 479 044 B1**
(45) Veröffentlichungstag und Bekanntmachung des Hinweises auf die Patenterteilung: **07.08.2013**
(21) Anmeldenummer: 11184682.0
(22) Anmeldetag: 11.10.2011
(51) Int. Cl.: B60C 27/08, B60C 27/10, F16G 15/04

(54) **Verkürzungselement für Reifenkette und Reifenkette**
Reduction element for tyre chain and tyre chain
Elément de raccourcissement pour chaîne de pneu et chaîne de pneu

(30) Priorität: 25.01.2011 DE 102011003124
(43) Veröffentlichungstag der Anmeldung: 25.07.2012
(73) Patentinhaber: RUD Ketten Rieger & Dietz GmbH u. Co. KG, 73432 Aalen (DE)
(72) Erfinder: Grimm, Anton, 73479 Ellwangen (DE)
(74) Vertreter: Grünecker, Kinkeldey, Stockmair & Schwanhäusser

(56) Entgegenhaltungen:
- DE-A1- 4 239 482
- DE-A1- 19 748 941
- GB-A- 2 127 129

## Beschreibung

Die Erfindung betrifft ein Verkürzungselement für Reifenketten mit wenigstens zwei zumindest abschnittsweise in Umfangsrichtung des Reifens verlaufenden Spurkettensträngen, wobei das Verkürzungselement wenigstens eine Aufnahme aufweist, in der die Spurkettenstränge in einer Sperrstellung relativ zueinander in ihrer Längsrichtung unverschieblich befestigbar sind, wobei die Aufnahme wenigstens einen Sperrschlitz, in dem wenigstens ein Spurkettenstrang in der Sperrstellung aufnehmbar ist, und wenigstens eine Durchzugsöffnung aufweist, und wobei der wenigstens eine Spurkettenstrang von der Sperrstellung in eine in der Durchzugsöffnung angeordnete Durchziehstellung überführbar ist, in der die Außenkontur des wenigstens einen Spurkettenstranges in die Innenkontur der Durchzugsöffnung einschreibbar ist.

Die Erfindung betrifft ferner eine Reifenkette mit einem Laufnetz, das wenigstens zwei Spurkettenstränge, die sich von jeweiligen quer zur Umfangsrichtung voneinander beabstandeten ersten Haltestellen zu jeweiligen zweiten Haltestellen in Umfangsrichtung erstrecken, und wenigstens ein Verkürzungselement aufweist, das zwischen den ersten und zweiten Haltestellen angeordnet ist und in dem die wenigstens zwei Spurkettenstränge in einer Sperrstellung quer zur Umfangsrichtung voneinander beabstandet und in Längsrichtung unverschieblich gehalten sind, wobei dass im Verkürzungselement wenigstens eine Durchzugsöffnung vorgesehen ist, in die der wenigstens eine Spurkettenstrang aus der Sperrstellung bewegbar ist und in der der wenigstens eine Spurkettenstrang in seiner Längsrichtung relativ zum wenigstens einen anderen Spurkettenstrang beweglich ist.

Reifenketten des oben genannten Typs finden in erster Linie als Gleitschutzvorrichtung für Fahrzeugreifen, beispielsweise als Schnee- oder Forstkette, aber auch als Reifenschutzkette Verwendung. Gleitschutzvorrichtungen dienen dazu, die Traktion des Fahrzeugreifens auf rutschigem Untergrund, wie Eis, Schnee oder Matsch, zu erhöhen. Reifenschutzketten sollen die Reifen gegen Beschädigungen schützen. Im Wesentlichen in Umfangsrichtung verlaufende Spurkettenstränge erhöhen die Richtungsstabilität und die Geradeauslauf-Eigenschaften der Reifenketten. Ein besonders guter Geradeauslauf ergibt sich bei durchgängigen Spurkettensträngen, die sich nicht nur abschnittsweise, sondern über die gesamte Lauffläche des Reifens in Umfangsrichtung erstrecken. Die Spurkettenstränge können auch abschnittsweise in Winkeln von bis zu ±45° und mehr zur Umfangsrichtung verlaufen. Diese Abweichungen entstehen in erster Linie an Verkürzungselementen, an denen die Spurkettenstränge V- oder X-förmig zusammengeführt werden, um die Länge des Laufnetzes zu kürzen. Eine derartige Verkürzung des Laufnetzes ist notwendig, um eine Reifenkette an verschiedene standardisierte Reifendurchmesser anzupassen.

Reifenketten mit Spurkettensträngen sind beispielsweise aus der DE 37 22 903 A1, der DE 38 23 661 A1, der EP 0 911 193 B1, der WO 2006/032155 A1 und der EP 2 050 590 A1 bekannt.

Bei den in der DE 37 22 903 A1 und der DE 38 23 661 A1 gezeigten Schneeketten dienen Greifelementträger, an denen die Spurkettenstränge verankert sind, zur Anpassung an unterschiedliche Reifendurchmesser. Der Umfang der Spurkettenstränge wird dadurch geändert, dass Kettenglieder in die Greifelementträger eingehängt werden. Dieses Prinzip wird auch bei der auf dem Markt erhältlichen Schneekette Clack & Go Quattro der Firma Weissenfels eingesetzt.

Bei anderen aus dem Markt bekannten Schneeketten, wie der Schneekette CENTRAX der Firma RUD oder der Schneekette K-Summit der Firma Thule wird das Laufnetz dadurch verkürzt, dass an einer oder mehreren Stellen die Spurkettenstränge X-förmig zusammengeführt sind. Dadurch verkleinert sich der Abstand der benachbarten Verankerungspunkte der Spurkettenstränge in Umfangsrichtung gegenüber der absolut parallelen Führung und der Umfang des Laufnetzes wird kleiner.

Ferner beschreibt die gattungstäldende GB 2 127 129 A ein Verkürzungselement für Ketten, das im Wesentlichen aus einem mittig leicht gekrümmten, flachen Bauteil mit einer Öffnung besteht, die aus zwei sich mittig kreuzenden Schlitzen gebildet ist. Die DE 42 39 482 A1 beschreibt ein Verkürzungsorgan mit Durchzugsöffnungen für Rundstahlglieder, die in sich von den Durchzugsöffnungen weg erstreckenden Sperrschlitzen arretierbar sind. Aus der DE 197 48 941 A1 sind Verkürzungslaschen bekannt, die zwei Sperrschlitze aufweisen.

Nachteilig bei sämtlichen oben genannten Verkürzungselementen und Reifenketten ist, dass eine Verkürzung nur mit Hilfe von Werkzeug möglich ist. Die Anpassung des Laufnetzes an leicht unterschiedliche Reifendurchmesser unter winterlichen Verhältnissen oder gar am Straßenrand ist dadurch unnötig erschwert.

Die Erfindung setzt sich daher zum Ziel, ein einfach und fehlerfrei zu bedienendes System zu schaffen, das eine Verkürzung des Laufnetzes von Reifenketten auch unter schwierigen Bedingungen ohne Weiteres erlaubt.

Diese Aufgabe wird für das eingangs genannte Verkürzungselement und die eingangs genannte Reifenkette erfindungsgemäß dadurch gelöst, dass der wenigstens eine Spurkettenstrang in der Durchziehstellung gegenüber der Sperrstellung um einen vorbestimmten Winkel um die Längsrichtung gedreht ist, um zu verhindern, dass sich der Spurkettenstrang bei einer Bewegung aus dem Sperrschlitz in die Durchzugsöffnung selbsttätig lösen kann. Somit nimmt der wenigstens eine Spurkettenstrang nicht automatisch die Durchziehstellung ein, wenn er vom Sperrschlitz in die Durchzugsöffnung verschoben wird. Der Winkel kann dabei zwischen wenigstens etwa 20° und wenigstens etwa 50°, vorzugsweise um die 45° betragen.

Zum Verkürzen des Laufnetzes wird der wenigstens eine Spurkettenstrang, der ursprünglich im Sperrschlitz bzw. in der Sperrstellung gehalten ist, in die Durchziehstellung bzw. in die Durchzugsöffnung bewegt und anschließend so durch die Durchzugsöffnung gezogen, so dass sich der Abstand in Umfangsrichtung zwischen dem Verkürzungselement und den Haltestellen der Spurkettenstränge auf der einen Seite des Verkürzungselements verringert. Da die Innenkontur der Durchzugsöffnung die Außenkontur des wenigstens einen Spurkettenstranges aufnimmt, kann dieser, ohne zu blockieren, in Längsrichtung durch die Durchzugsöffnung gezogen werden.

Da der andere Spurkettenstrang in der Sperrstellung durch das Verkürzungselement unverschieblich gegenüber dem verkürzten Spurkettenstrang gehalten ist, bleibt der Abstand zwischen dem Verkürzungselement und den anderen Haltestellen auf der Seite des Verkürzungselements, zu der hin der Spurkettenstrang durch die Durchzugsöffnung gezogen wurde, gleich. Insgesamt ist also auf einfache Weise der Abstand zwischen den beiden Haltestellen zu den beiden Seiten des Verkürzungselements verkleinert und damit der Durchmesser des Laufnetzes verringert worden. Werkzeug muss dabei nicht eingesetzt werden. Die Reifenkette kann auch mit Handschuhen verkürzt werden.

Im Folgenden sind Weiterbildungen der Erfindung erläutert, die unabhängig voneinander mit dem oben beschriebenen Lösungsgedanken kombiniert werden können.

Bevorzugt ist das Verkürzungselement vorzugsweise sowohl in der Sperrstellung als auch in der Durchziehstellung unverlierbar an wenigstens einem Spurkettenstrang gehalten. Dies wird auf einfache Weise dadurch erreicht, dass die Aufnahme in Richtung quer zu dem wenigstens einen Spurkettenstrang rundum geschlossen ist. Alternativ kann die Aufnahme sich auch abschnittsweise quer zur Umgebung öffnen. Dann sollte allerdings die lichte Weite dieser Öffnung kleiner sein als die Materialdicke der Kettenglieder der Spurkettenstränge, um ein Herausfallen der Kettenglieder aus der Aufnahme zu vermeiden.

Eine weitere vorteilhafte Ausgestaltung sieht vor, dass wenigstens zwei Sperrschlitze vorgesehen und durch wenigstens eine, vorzugsweise genau eine gemeinsame Durchzugsöffnung miteinander verbunden sind. Die beiden Sperrschlitze können insbesondere in Schlitzrichtung miteinander fluchtend angeordnet sein. Diese Ausgestaltung erlaubt es, dass die beiden Sperrschlitze und die entsprechenden Sperrstellungen der Spurkettenstränge quer zur Umfangsrichtung nur gering voneinander beabstandet sind. Der geringe Abstand der Spurkettenstränge in der Sperrstellung führt zu einer stärkeren Verkürzung des Kettenstranges und ermöglicht somit die Anpassung an deutlich unterschiedliche Reifendurchmesser, ohne dass dafür werkseitig unterschiedlich lange Spurkettenstränge konfektioniert werden müssen.

Die gemeinsame Durchzugsöffnung verhindert zudem Fehlbedienungen, da nur jeweils ein Spurkettenstrang verkürzt werden kann und während des Verkürzungsvorganges der andere Spurkettenstrang nicht in die Durchzugsöffnung gelangen kann.

Der Abstand, in dem die Spurkettenstränge in dem Verkürzungselement gehalten sind, kann sich vom Abstand der Spurkettenstränge an den Haltestellen unterscheiden. Der Sperrschlitz befindet sich vorzugsweise an der Seite der Durchzugsöffnung, zu der hin der Spurkettenstrang zur Haltestelle hin verläuft

Ist der Abstand der Spurkettenstränge an den Haltestellen größer als der Abstand in der Sperrstellung, befindet sich der wenigstens eine Sperrschlitz vorzugsweise näher an einem Ende des Verkürzungselements, während die Durchzugsöffnung vorzugsweise eher im Bereich der Mitte des Verkürzungselements angeordnet ist. Durch diese Anordnung wird erreicht, dass aufgrund der V- oder X-förmig auf das Verkürzungselement zulaufenden Kettensträngen und der im Betrieb in den Kettensträngen auftretenden Zugkraft der Spurkettenstrang weg von der Durchzugsöffnung in den Sperrschlitz gedrückt wird. Ein selbsttätiges Lösen wird somit unwahrscheinlicher. Ist der Abstand der Spurkettenstränge in der Sperrstellung größer als an den Haltestellen, so befindet sich die Durchzugsöffnung an dem von der Mitte weg weisenden Ende des Sperrschlitzes.

In Längsrichtung bzw. im Querschnitt betrachtet weist ein Spurkettenstrang aus aufeinanderfolgenden Rund- oder Profilstahlkettengliedern eine kreuzförmige Außenkontur auf. Damit sich der in der Durchzugsöffnung befindliche Kettenstrang nur dann in Längsrichtung durchziehen lässt, wenn er von Hand geführt ist, kann die Durchzugsöffnung Ausbuchtungen aufweisen, die jeweils den Schenkeln des von dem wenigstens einen Spurkettenstrang gebildeten Kettenkreuzes zugeordnet sind. Dadurch ist die Lage des Spurkettenstranges in der Durchziehstellung, in der er durch die Durchzugsöffnung gezogen werden kann, genau vorgegeben. Bei einer nur geringen Verdrehung des Spurkettenstranges gegenüber der von den Ausbuchtungen vorgegebenen Orientierung, die zum Durchziehen notwendig ist, ist der Spurkettenstrang in Längsrichtung blockiert. Auch dies dient der Sicherheit gegen unbeabsichtigtes Lösen des Kettenstranges.

Entsprechend den Schenkeln des von der Kontur des Spurkettenstranges in Längsrichtung gebildeten Kettenkreuzes können jeweils zwei Paare von sich bezüglich der Mitte des Sperrschlitzes gegenüberliegenden Ausbuchtungen vorgesehen sein. Jede Ausbuchtung ist dabei einem Schenkel des Kettenkreuzes zugeordnet.

Gemäß einer weiteren vorteilhaften Ausgestaltung kann das Verkürzungselement im Wesentlichen als eine vorzugsweise längliche Platte ausgestaltet sein und können sich die Sperrschlitze und die Durchzugsöffnung in den Flachseiten der Platte befinden. Bevorzugt sind die Sperrschlitze und die Durchzugsöffnung wenigstens etwa fluchtend nebeneinander angeordnet. In der plattenförmigen Ausgestaltung kann das Verkürzungselement als zusätzlich traktionserzeugendes Gleitschutzelement dienen, dessen Schmalseite sich radial vom Reifen weg erstreckt und kantenartig in den weichen Untergrund gräbt. Durch die Längserstreckung vorzugsweise quer zur Umfangsrichtung wird die Antriebskraft vom Reifen über das Verkürzungselement gut auf den Untergrund übertragen.

Zur weiteren Sicherung gegen ein unbeabsichtigtes Lösen der verkürzten Spannkettenstränge kann wenigstens ein Sicherungselement vorgesehen sein, das beispielsweise in der Aufnahme vorzugsweise wiederholt lösbar befestigbar ausgestaltet ist. Bevorzugt lässt sich das Sicherungselement in der wenigstens einen Durchzugsöffnung und/oder zwischen der wenigstens einen Sperrstellung und der wenigstens einen Durchziehstellung anbringen. Das Sicherungselement blockiert so die Bewegung des Spurkettenstranges aus der Sperrstellung in die Durchziehstellung.

Um bei winterlichen Verhältnissen das Sicherungselement einfach zu befestigen und zu lösen, kann es formschlüssig mit der Aufnahme, bevorzugt wiederholt lösbar, in Eingriff bringbar ausgestaltet sein. Insbesondere ist ein Einclipsen möglich. Das Sicherungselement kann aus einem wenigstens abschnittsweise elastisch verformbaren Körper, beispielsweise aus einem elastischen Kunststoff gefertigt sein, der bevorzugt auch noch bei tiefen Temperaturen bis um die -30 °C seine Elastizität bewahrt und wenig verschleißanfällig für auf winterlichen Straßen anzutreffenden Umgebungsverhältnisse ist.

Das Sicherungselement kann im Wesentlichen hantelförmig ausgestaltet sein und zwei Köpfe aufweisen, deren Außenkontur größer ist als die lichte Weite der Aufnahme, insbesondere der Durchzugsöffnung. Zum Anbringen in der Aufnahme wird einfach ein Kopf durchgesteckt, so dass das Verkürzungselement sich zwischen den beiden Köpfen befindet. Der Abstand der beiden Köpfe ist bevorzugt allenfalls geringfügig kleiner oder größer als die Dicke des Verkürzungselements. Das Sicherungselement ist vorzugsweise in Richtung zu dem wenigstens einen Sperrschlitz unverschieblich gehalten. Ein Bereich zwischen den Köpfen weist vorzugsweise einen Querschnitt auf, der größer ist als die lichte Weite des Sperrschlitzes, um ein Verschieben des Sicherungselements aus der Durchzugsöffnung in den Sperrschlitz und somit eine Freigabe der Durchzugsöffnung zu verhindern.

Im verkürzten Zustand kann sich wenigstens ein Spurstrang straff und wenigstens ein anderer Spurstrang lose von der ersten Haltestelle zum Verkürzungselement und der wenigstens eine Spurstrang lose und der wenigstens eine andere Spurstrang straff vom Verkürzungselement zur zweiten Haltestelle erstrecken. Zum Verkürzen reicht es somit aus, wenn ein einziger Spurkettenstrang durch die Durchzugsöffnung gezogen und verkürzt wird. Der verkürzte Teilstrang dieses Spurkettenstranges führt auf dieser Seite des Verkürzungselements zu einem losen anderen Spurkettenstrang. Auf der anderen Seite des Verkürzungselements ist dagegen der durchgezogene Spurkettenstrang lose, während der andere Kettenstrang aufgrund seiner unverändert kurzen Länge straff bleibt.

Im Folgenden ist die Erfindung anhand von Ausführungsbeispielen mit Hinweis auf die beigefügten Zeichnungen näher erläutert. Die bei den einzelnen Ausführungsbeispielen dargestellten Merkmalskombinationen sind lediglich exemplarisch und können nach Maßgabe der obigen Ausführungen geändert werden, wenn es für den einzelnen Anwendungsfall auf den mit jeweiligen Merkmal verbundenen Vorteil nicht ankommt.

Es zeigen:
- Fig. 1: eine schematische Perspektivdarstellung einer erfindungsgemäß mit Verkürzungselement ausgestatteten Reifenkette;
- Fig. 2: eine schematische Perspektivdarstellung eines Abschnittes der Fig. 1 während des Verkürzungsvorganges;
- Fig. 3: eine schematische Darstellung einer Ausführungsform des Verkürzungselements;
- Fig. 4: eine schematische Darstellung einer weiteren Ausführungsform des Verkürzungselements;
- Fig. 5: eine schematische Darstellung einer weiteren Ausführungsform des Verkürzungselements;
- Fig. 6: eine schematische Darstellung einer weiteren Ausführungsform des Verkürzungselements;
- Fig. 7: eine schematische Darstellung einer Ausführungsform eines Verkürzungselements mit Sicherungselement;
- Fig. 8: eine schematische Perspektivdarstellung einer weiteren Ausführungsform eines Verkürzungselements;
- Fig. 9: eine schematische Perspektivdarstellung einer weiteren Ausführungsform einer Reifenkette.

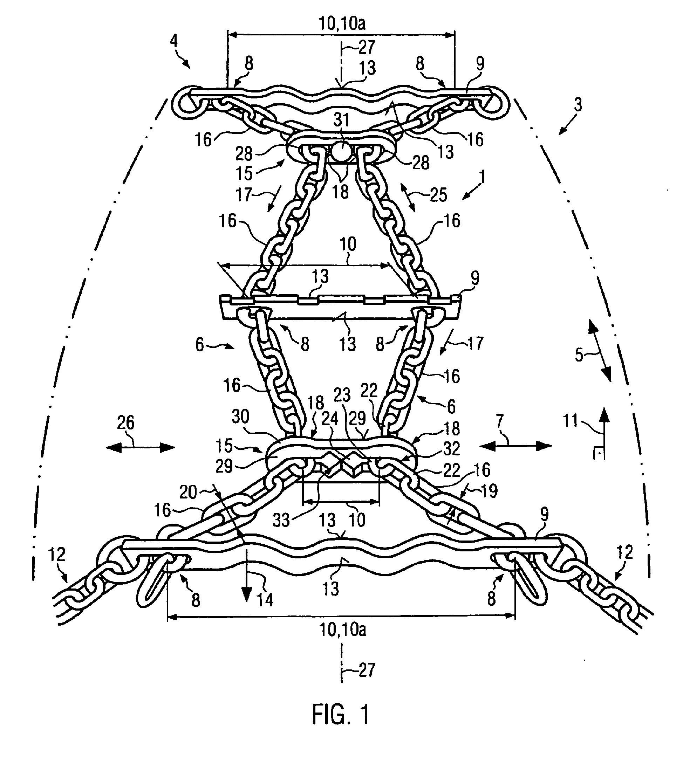

Zunächst werden Aufbau und Funktionsweise der Erfindung anhand der Fig. 1 erläutert.

Fig. 1 zeigt schematisch das Laufnetz 1 einer auf eine Lauffläche 2 eines Fahrzeugreifens 3 aufgezogenen Reifenkette 4. Die Reifenkette 4 weist mehrere Abschnitte von sich nicht überkreuzenden, in Umfangsrichtung 5 des Fahrzeugsreifens 3 verlaufenden Spurkettenabschnitten 6 auf. Die Spurkettenabschnitte sind in einer quer zur Umfangsrichtung 5 verlaufenden Querrichtung 7 in Haltestellen 8 eines Querstegs 9 gehalten. Wie Fig. 1 zeigt, kann die Reifenkette 4 in Umfangsrichtung 5 eine Abfolge von beispielsweise unterschiedlich langen Querstegen bzw. Verankerungselementen 9 aufweisen, so dass sich der Abstand 10 in Querrichtung 7 der Spurkettenabschnitte 6 voneinander in Umfangsrichtung 5 ändert. Selbstverständlich kann das Laufnetz 1 auch ausschließlich identische Querstege aufweisen.

An dem beispielsweise längeren Quersteg 9a, an dem die Spurkettenabschnitte 6 in einem besonders großen Abstand 10a voneinander befestigt sind, können in radialer Richtung 11 des Fahrzeugsreifens 3 verlaufende Haltestränge 12 angeordnet sein, die sich über die Reifenschulter in radialer Richtung 11 zur Nabe des Fahrzeugreifens 3 erstrecken und im Bereich der Reifenflanke (nicht gezeigt) oder der Felge (nicht gezeigt) an Halteringen befestigt sind, die die Reifenkette 4 gegen seitliches Abfallen in Querrichtung 7 sichern.

Aus der sich in Umfangrichtung 5 periodisch wiederholenden Abfolge der Querstege 9 ergeben sich im Wesentlichen parallel zueinander verlaufende Spurkettenabschnitte, die bevorzugt in Umfangsrichtung 5 durchgängig sind. Die Spurkettenabschnitte 6 sorgen für einen stabilen Geradeauslauf der Reifenkette.

Die Querstege 9 sind aus dickem Blechmaterial beispielsweise gestanzt oder geschmiedet. Die Querstege 9 können auch aus widerstandsfähigem Kunststoff gefertigt sein. Die Spurkettenabschnitte 6 durchsetzen die Flachseiten 13 der Querstege 9, so dass die Flachseiten 13 in Umfangsrichtung 5 weisen. Die Querstege 9 stellen sich somit während des Betriebs auf der Lauffläche 2 auf, so dass sich ihre kantenförmigen Flachseiten als traktionserhöhende Elemente in den weichen Untergrund graben können und die über den Fahrzeugreifen 3 wirkende Antriebskraft 14 leichter an den Untergrund abgegeben werden kann.

Die in Fig. 1 dargestellte Reifenkette 4 soll für eine Reihe von unterschiedlichen Breiten und Durchmessern von Fahrzeugreifen 3 geeignet sein. Damit bei zügiger Fahrt das Laufnetz 1 nicht von der Lauffläche 2 aufgrund der Zentrifugalbeschleunigung abheben und gegen den Radkasten (nicht gezeigt) des Fahrzeugs (nicht gezeigt) schlagen kann, muss das Laufnetz 1 bzw. müssen die Spurkettenabschnitte 6 straff über die Lauffläche 2 gespannt sein. Bei unterschiedlichen Reifendurchmessern erfordert dies eine Verkürzung des Umfangs des Laufnetzes 1 ausgehend von einer unverkürzten Maximallänge.

Um das Laufnetz 1 zu verkürzen, ist zwischen den Querstegen 9 bzw. den von ihnen gebildeten Haltestellen 8 der Spurkettenabschnitte 6 wenigstens ein Verkürzungselement 15, das ähnlich einem Quersteg 9 ausgebildet ist, angeordnet. Fig. 1 zeigt, dass das wenigstens eine Verkürzungselement 15 zwischen einem längeren 9a und einem kürzeren 9b Quersteg positioniert sein kann. Die Verkürzungselemente 15 können aus einem Blechmaterial gestanzt oder aus einem widerstandfähigen Kunststoff gefertigt sein. Der Abstand 10 in Querrichtung 7 zwischen den Spurkettenabschnitten 6 ist an den Verkürzungselementen 15 gegenüber den Abständen 10 an den Querstegen 9 vorzugsweise nochmals verkleinert, so dass an wenigstens einer Seite des Verkürzungselements 15 die Spurkettenabschnitte 6 V-förmig von den Haltestellen 8 zum Verkürzungselement 15 hin aufeinander zu laufen.

Das Verkürzungselement 15 unterteilt die Spurkettenstränge 6 in jeweils zwei Teilstränge 16.

Im Verkürzungselement 15 sind die Spurkettenstränge 6 in deren Längsrichtung unverschieblich relativ zueinander in einer Sperrstellung gehalten. Dies wird beispielsweise durch die Ausbildung von zwei, wenigstens jedoch einem, Sperrschlitzen 18 erreicht, in die jeweils ein Spurkettenstrang 6 eingeführt ist.

Die Sperrschlitze weisen eine lichte Weite auf, die größer ist als die Profildicke 19 gleichzeitig kleiner ist als die äußere Breite 20 der Kettenglieder 21 der Spurkettenstränge 6. Somit können die beiden Kettenglieder 22, die sich zu beiden Seiten an das im Sperrschlitz 18 sich befindliche Kettenglied 23 anschließen, nicht durch den Sperrschlitz 18 bewegen.

Jedem Sperrschlitz 18 zugeordnet ist eine Durchzugsöffnung 24, deren lichte Weite so bemessen ist, dass sich die Spurkettenstränge 6 in deren Längsrichtung 17 durch die Durchzugsöffnung 24 ziehen lassen. Auf die Ausgestaltung der Durchzugsöffnung 24 ist weiter unten eingegangen.

Bei der in Fig. 1 dargestellten Ausführungsform ist eine einzige Durchzugsöffnung 24 mit beiden Sperrschlitzen 18 verbunden, so dass abwechselnd stets nur ein Spurkettenstrang 6 in die Durchzugsöffnung 24 bewegt werden kann. Alternativ kann jedem durch das Verkürzungselement 15 geführten Spurkettenstrang 6 eine Durchzugsöffnung 24 zugeordnet sein.

Aufgrund der in die Spurkettenstränge 6 ausgehend von der Antriebskraft 14 eingeleiteten Zugkräfte 25, ziehen die Spurkettenstränge 6 während der Fahrt in axialer Richtung 26, die hier der Querrichtung 7 entspricht, nach außen. Um die Spurkettenstränge 6 durch diese Zugkräfte stärker in den Sperrschlitzen zu halten, befindet sich der wenigstens eine Sperrschlitz 18 außen und die wenigstens eine Durchzugsöffnung 24 befindet sich bevorzugt an dem zur Reifenmitte 27 gewandten Ende 28 des jeweiligen Sperrschlitzes 18.

Die Sperrschlitze 18 und die wenigstens eine Durchzugsöffnung 24 durchsetzen bevorzugt die Flachseiten 29 des Verkürzungselements 15, so dass auch dieses im Betrieb der Reifenkette 4 aufgerichtet ist und sich seine Flachseiten in Umfangsrichtung 5 orientieren. Die kantenförmige Schmalseite 30 des Verkürzungselements 15 dient somit als weiteres traktionserhöhendes Element.

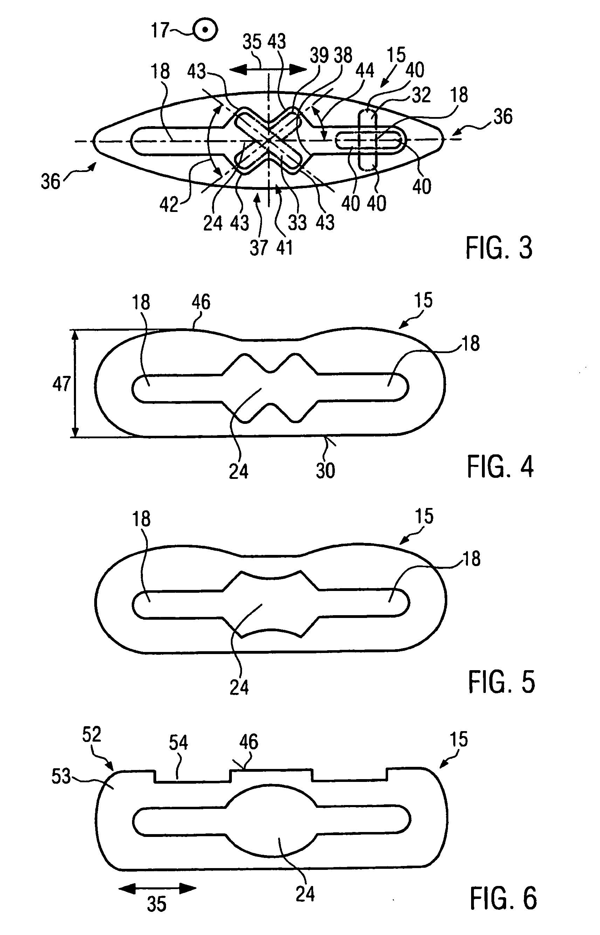

In Fig. 1 ist ein weiteres Verkürzungselement 15 gezeigt, das mit einem Sicherungselement 31 versehen ist. Das Sicherungselement 31 ist am Verkürzungselement 15 befestigt, vorzugsweise über einen Formschluss. Es verhindert, dass die Spurkettenstränge 6 von ihrer Sperrstellung 32 in Sperrschlitz 18 in eine sich im Bereich der Durchzugsöffnung 24 angeordnete Durchziehstellung 33 bewegen und lösen können. Auf das Sicherungselement wird weiter unten bei Fig. 6 im Detail eingegangen.

Um das Laufnetz zu verkürzen, muss lediglich ein Spurkettenstrang 6 von der in Fig. 1 gezeigten Sperrstellung im Sperrschlitz in die Durchziehstellung 33 in der Durchzugsöffnung 24 bewegt und dann durch die Durchzugsöffnung 24 gezogen werden. Anschließend wird der Spurkettenstrang 6 wieder in den Sperrschlitz 18 geschoben und damit in die Sperrstellung 32 überführt. Daraus resultieren sich bezüglich des Verkürzungselements kreuzweise gegenüberliegende lose und straffe Teilstränge 16.

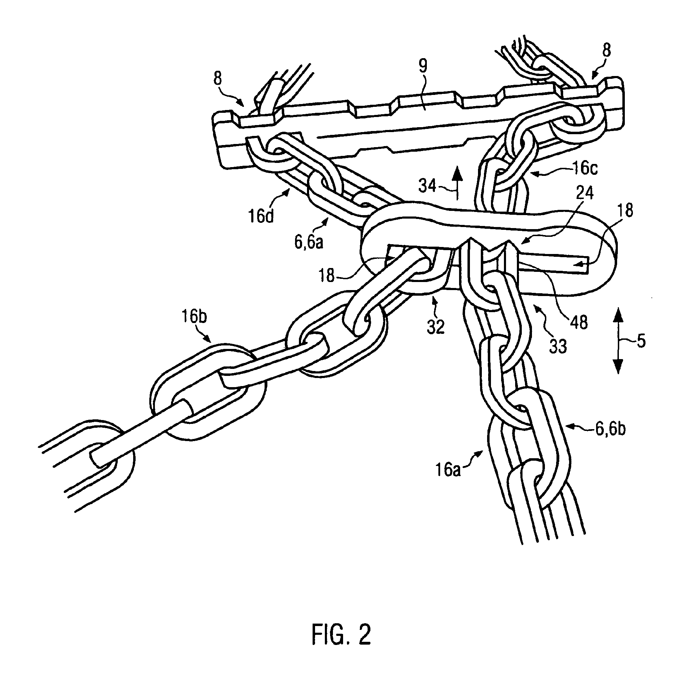

Dies ist mit Bezug auf die Fig. 2 erläutert, in der der eine Spurkettenstrang 6, 6a in der Sperrstellung 32 und der andere Spurkettenstrang 6, 6b in der Durchziehstellung 33 angeordnet ist. Der sich in der Durchzugsöffnung 24 bzw. Durchziehstellung 33 befindliche, in Fig. 2 rechte, Spurkettenstrang 6b wird dabei in der Zeichnung nach oben, in Richtung des Pfeiles 34 durch die Durchzugsöffnung 24 gezogen. Daraus resultiert eine Verkürzung und Straffung des unteren, in der Zeichnung rechten Teilstranges 16a dieses Spurkettenstranges 6b, so dass der auf in Umfangsrichtung 5 derselben Seite des Verkürzungselements 15 gelegene, unverkürzte Teilstrang 16b des anderen Spurkettenstranges 6a aufgrund dieser Verkürzung lose wird. Die Verkürzung des Teilstranges 16a führt dazu, dass der auf der anderen Seite des Verkürzungselements 15 gelegene Teilstrang 16c desselben Spurkettenstranges 6b lose wird, da er nunmehr länger ist als der Teilstrang 16d des anderen Spurkettenstranges 6a auf dieser Seite des Verkürzungselements 15. Somit wird die Verkürzung über die beiden kreuzweise zueinander angeordneten, kürzeren und damit straffen Kettenstränge 16a, 16d erreicht, während die relativ dazu längeren Teilstränge 16b, 16c lose sind.

In den Fig. 3 bis 5 sind beispielhaft und schematisch mögliche Ausgestaltungen des Verkürzungselements 15 dargestellt. Der Kürze halber werden für bau- oder funktionsgleiche Elemente, die bereits im Zusammenhang mit den Fig. 1 und 2 beschrieben sind, dieselben Bezugszeichen verwendet.

Allen Ausführungsbeispielen gemeinsam ist, dass zwei Sperrschlitze 18 vorgesehen sind, die sich zu den beiden in Längsrichtung 35 des Verkürzungselements 15 gelegenen Enden 36 des Verkürzungselements von einem Mittenbereich 37 des Verkürzungselements weg erstrecken. Im Mittenbereich 37 ist die Durchzugsöffnung 24 angeordnet. Die Durchzugsöffnung weist eine Innenkontur 38 auf, in die eine Außenkontur 39 wenigstens eines Spurkettenstranges 6, in dessen Längsrichtung 17 betrachtet, einschreibbar ist. Die Außenkontur 39 ist in Fig. 3 schematisch in doppelt strichpunktierten Linien wiedergegeben. Die Außenkontur 39 ist etwa kreuzförmig, wobei die Schenkel 40 des Kettenkreuzes 41 nicht exakt senkrecht zueinander stehen müssen, da aufgrund des relativen Spiels der Kettenglieder 21, 22 zueinander die Kette sich etwas flacher legt. Der kleinere, sich in axialer Richtung 26 öffnende Winkel 42 zwischen den Mittenebenen der Kettenglieder beträgt zwischen 30° und 50°.

Die Innenkontur 38 der Durchzugsöffnung 24 weist wenigstens vier Ausbuchtungen 43 auf, die den Schenkeln 40 des Kettenkreuzes 41 zugeordnet sind. Durch diese Ausgestaltung lässt sich ein Spurkettenstrang 6 nur dann durch die Durchzugsöffnung 24 ziehen, wenn seine Kettenglieder 21, 22 entsprechend der Vorgabe der Innenkontur 38 der Durchzugsöffnung 24 ausgerichtet sind. Dies erhöht die Sicherheit gegen ein zufälliges Lösen des verkürzten Laufnetzes. Die Ausbuchtungen liegen sich bezüglich der Mitte des wenigstens einen Sperrschlitzes 18 paarweise gegenüber.

Die Sicherheit wird dadurch nochmals erhöht, dass das Kettenkreuz 41 in der doppelt strichpunktiert dargestellten Durchziehstellung 33 gegenüber der Sperrstellung 32 (ebenfalls doppelt strichpunktiert dargestellt) um einen Drehwinkel 44 gedreht ist. Rutscht also der Spurkettenstrang 6 während des Betriebs der Reifenkette 4 (vgl. Fig. 1) aus dem Sperrschlitz 18 in die Durchzugsöffnung 24, so befindet er sich noch nicht in der Sperrstellung 32, sondern muss noch um den Drehwinkel 44 gedreht werden. Der Drehwinkel 44 kann zwischen etwa 20° und etwa 60°, vorzugsweise um die 45° betragen.

Das Verkürzungselement der Fig. 3 ist mit etwa ellipsenförmigen, in Querrichtung 7 langgestreckten Flachseiten 29 versehen. Diese Form eignet sich besonders für schmale Reifen bis ca. 165 mm Breite, da eine bessere Mittenabstützung innerhalb der Lauffläche erreicht wird.

Das Verkürzungselement der Fig. 4 unterscheidet sich lediglich hinsichtlich der äußeren Form vom Ausführungsbeispiel der Fig. 3. Bei der Ausführungsform der Fig. 4 ist die der Lauffläche 2 (vgl. Fig. 1) zugewandte Schmalseite 30 gerade ausgestaltet, während die von der Lauffläche 2 wegweisende, äußere Schmalseite 46 im Bereich der Sperrstellung 32 eine größere Dicke aufweist als im Bereich der Durchziehstellung 33. Insbesondere kann die Höhe 47 des Verkürzungselements 15 größer sein als die äußere Breite 20 der Kettenelemente 21, 22 der Spurkettenstränge 6 (Fig. 1). Das Verkürzungselement 15 überragt somit die Spurkettenstränge 6 und erhöht die Traktion. Außerdem wird bei dieser Ausgestaltung durch das Material beidseits des Sperrschlitzes 18 eine höhere Bruchfestigkeit gegenüber den bei verkürzten Spurkettensträngen 6 herrschenden Zugkräften 25 (Fig. 1), die kreuzweise von einem Teilkettenstrang 16d über das Verkürzungselement zum anderen Teilstrang 16a (Fig. 2) geleitet werden, erreicht.

Bei der Ausführungsform der Fig. 5 ist die Durchzugsöffnung 24 gegenüber den Ausführungsformen der Fig. 3 und 4 modifiziert. Die Ausbuchtungen 43 sind weniger markant ausgeprägt und können auch ganz entfallen. Dadurch lässt sich der sich jeweils in der Durchziehstellung 33 befindliche Kettenstrang einfacher und mit einer geringeren Verhakelungsgefahr durchziehen als bei den Ausführungsformen der Fig. 3 und 4. Dieser einfacheren Bedienung steht allerdings eine geringere Sicherheit gegen ein zufälliges Durchrutschen des Spurkettenstranges 6 gegenüber. Im Übrigen entspricht die Ausführungsform der Fig. 5 der Ausführungsform der Fig. 4.

Die Ausführungsform der Fig. 6 unterscheidet sich von dem Verkürzungselement, wie es in den Fig. 3 bis 5 dargestellt ist, durch eine runde, beispielsweise kreis- oder ellipsenförmige, Durchzugsöffnung 24. Die Durchzugsöffnung 24 weist dabei keine Ausbuchtungen 43 auf.

Die äußere Flachseite 46, die im Betrieb der Reifenkette mit dem Untergrund in Kontakt kommt, ist zudem mit einem Greifprofil 52 versehen, bei dem Vorsprünge 53 und Ausnehmungen 54 in Längsrichtung 35 des Verkürzungselements 15 sich abwechseln. Durch das Greifprofil 52 wird die Seitenstabilität der Reifenkette gegen seitliches Abrutschen erhöht.

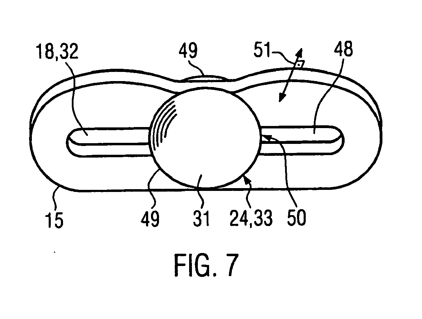

In Fig. 7 schließlich ist ein Verkürzungselement 15 mit angebrachten Sicherungselement 31 dargestellt. Das Sicherungselement 31 ist so angeordnet, dass sich kein Spurkettenstrang 6 von der Sperrstellung 32 selbsttätig in die Durchziehstellung 33 bewegen kann. Hierzu wird das Sicherungselement 31, wie in Fig. 6 gezeigt, in die von den Sperrschlitzen 18 und der wenigstens einen Durchzugsöffnung 24 gebildeten Aufnahme 48 gesteckt, in der es dann formschlüssig gehalten ist.

Das Sicherungselement 31 kann aus einem elastisch verformbaren Material gefertigt sein, das unter Verformung in die Aufnahme 48 einzusetzen ist, vorzugsweise in die Durchzugsöffnung 24.

Das Sicherungselement 31 kann hantelförmig ausgebildet sein, wobei die beiden Köpfe 49 größer sind als die Innenkontur der Durchzugsöffnung 24. Ein die Köpfe 49 verbindender Mittenbereich 50 weist bevorzugt einen Durchmesser auf, der größer ist als die lichte Weite des Sperrschlitzes 18. Das Sicherungselement 31 kann somit nicht versehentlich in einen Sperrschlitz 18 geschoben werden.

Muss das Laufnetz 2 verkürzt werden, so wird das Sicherungselement 31 in Dickenrichtung 51 des Verkürzungselements 15 einfach herausgedrückt. Dann kann einer der Spurkettenstränge 6 aus dem je entsprechenden Sperrschlitz 18 in die Durchzugsöffnung 24 verschoben und, wie im Hinblick auf Fig. 2 beschrieben, durchgezogen werden.

Die Reifenkette 4 kann in einer Modifikation auch mehr als zwei Spurkettenstränge 6 aufweisen, die allesamt oder nur zum Teil durch das Verkürzungselement 15 geführt sind. So können in einem Sperrschlitz 18 mehrere Spurkettenstränge 6 nebeneinander gehalten sein. Zum Verkürzen muss lediglich ein Spurkettenstrang 6 gegenüber den übrigen Spurkettensträngen 6 in Längsrichtung 17 relativ bewegt und anschließend wieder in den Sperrschlitz eingeführt werden.

Alternativ kann wenigstens ein Spurkettenstrang 6 auch im Verkürzungselement 15 verankert sein. Dann muss für den anderen Spurkettenstang lediglich eine Durchzugsöffnung 24 und lediglich ein Sperrschlitz 16 in der Aufnahme 48 vorgesehen sein. Das Verkürzungselement 15 kann dann gleichzeitig als Quersteg 9 dienen.

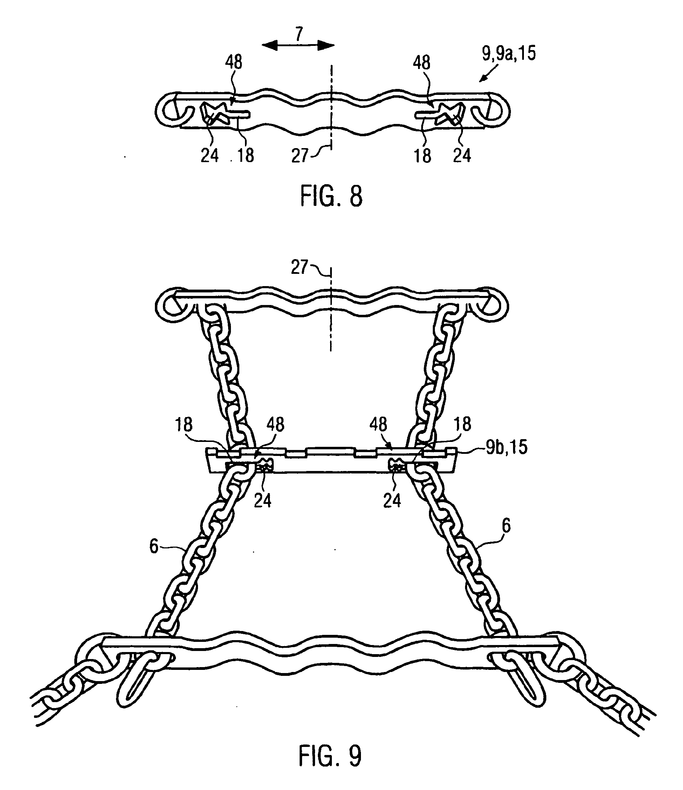

Fig. 8 zeigt eine Ausführungsform eines Querstegs 9, hier eines langen Querstegs 9a, der gleichzeitig als Verkürzungselement 15 dient. Der Quersteg ist an seinen beiden in Querrichtung 7 bzw. im Wesentlichen quer zur Längsrichtung 17 der Spurkettenstränge 6 (vgl. Fig. 1) liegenden Enden mit jeweils einer Aufnahme 48 versehen. Die Aufnahmen 48 weisen jeweils einen Sperrschlitz 18 sowie eine Durchzugsöffnung 24 auf, die auf die oben geschilderte Weise aufgebaut sind und funktionieren.

Im Unterschied zu den oben geschilderten Ausführungsformen ist bei der Ausführungsform der Fig. 8 die Durchzugsöffnung 24 jeweils an dem von der Reifenmitte 27 bzw. der Mitte des Verkürzungselements 15 abgewandten Ende des jeweiligen Sperrschlitzes 18 angeordnet.

Diese Anordnung empfiehlt sich dann, wenn im Betrieb auf die durch die Aufnahmen 48 geführten Spurkettenstränge 6 (vgl. Fig. 1) eine zur Reifenmitte 27 bzw. Mitte des Verkürzungselements 15 wirkende Kraft erzeugt wird. Diese Kraft hält die Spurkettenstränge 6 in den Sperrschlitzen 18 und verhindert, dass sich die Kettenstränge 6 im Betrieb in die Durchzugsöffnung 24 bewegen können. Eine solche Kraft entsteht, wenn die Abstände zwischen den Haltestellen der benachbarten Querstege (nicht gezeigt) größer sind als die Abstände der Sperrpositionen beim Quersteg 9 der Fig. 8.

In die Aufnahmen 48 der Ausführungsform der Fig. 8 können ebenfalls Sicherungselemente 31 wie vorstehend gezeigt eingesetzt werden.

Bei der Ausführungsform der Fig. 9 sind gegenüber der Ausführungsform der Fig. 1 die Verkürzungselemente 15 zwischen den Querstegen 9 weggelassen. Stattdessen wird die Verkürzungsfunktion von einem der kurzen Querstege 9b wahrgenommen, der somit gleichzeitig als Verkürzungselement 15 dient.

Aufgrund seiner Länge weist der Quersteg 9b zwei getrennte Aufnahmen 48 auf, die jeweils mit eigenen Durchzugsöffnungen 24 und Sperrschlitzen 18 versehen sind. Im Unterschied zu den bei Fig. 8 beschriebenen Querstegen 9a sind jedoch die Durchzugsöffnungen 24 bei dem Verkürzungselement 15 an dem in Richtung Reifenmitte 27 gelegenen Ende der Sperrschlitze 18 angeordnet. Im Betrieb herrscht bei der Ausführungsform der Fig. 9 eine auf die Spurkettenstränge wirkende Kraft, welche in Richtung weg von der Reifenmitte 27 gerichtet ist. Diese Kraft resultiert daraus, dass sich der Abstand zwischen den Spurkettensträngen 6 im Bereich der kürzeren Querstege 9b verringert.

Von den in Fig. 8 und 9 gezeigten Ausführungsformen sind weitere Modifikationen möglich. So kann lediglich eine einzige Aufnahme 48 an einem Ende des jeweiligen Querstegs 9, 9a, 9b bzw. Verkürzungselements 15 angeordnet sein. Für die Verkürzung ist es ausreichend, wenn nur ein Spurkettenstrang durch die Durchzugsöffnung 24 gezogen und anschließend im Sperrschlitz 18 arretiert werden kann.

Außerdem können die langen und die kurzen Querstege 9a, 9b sämtlich als Verkürzungselemente 15 dienen und jeweils ein oder zwei Aufnahmen 48 aufweisen. Die Aufnahmen können auch alternierend links und rechts der Reifenmitte 27 angeordnet sein.

### Bezugszeichenliste

- 1: Laufnetz
- 2: Lauffläche
- 3: Fahrzeugreifen
- 4: Reifenkette
- 5: Umfangsrichtung
- 6: Spurkettenstränge
- 6a: der eine Spurkettenstrang
- 6b: der andere Spurkettenstrang
- 7: Querrichtung
- 8: Haltestellen
- 9: Verankerungselemente/Querstege
- 9a: langer Quersteg
- 9b: kurzer Quersteg
- 10: Abstand der Spurkettenstränge 6 in den Querstegen 9
- 10a: Abstand
- 11: radiale Richtung des Fahrzeugreifens 3
- 12: Haltestränge der Reifenkette 4
- 13: Flachseiten der Querstege 9
- 14: Antriebskraft
- 15: Verkürzungselemente
- 16, 16a, 16b, 16c, 16d: Teilstränge
- 17: Längsrichtung der Spurkettenstränge 6
- 18: Sperrschlitz
- 19: Profildicke der Kettenglieder der Spurkettenstränge 6
- 20: äußere Breite der Kettenglieder der Spurkettenstränge 6
- 21: Kettenglieder der Spurkettenstränge 6
- 22: an den Sperrschlitz angrenzende Kettenglieder
- 23: im Sperrschlitz befindliches Kettenglied
- 24: Durchzugsöffnung
- 25: Zugkräfte
- 26: axiale Richtung des Fahrzeugreifens 3
- 27: Reifenmitte
- 28: von der Reifenmitte abgewandte Enden des Sperrschlitzes 8
- 29: Flachseiten
- 30: Schmalseiten
- 31: Sicherungselement
- 32: Sperrstellung
- 33: Durchziehstellung
- 34: Pfeil
- 35: Längsrichtung des Verkürzungselements
- 36: in Längsrichtung 35 gelegenes Ende des Verkürzungselements 35
- 37: Mittenbereich des Verkürzungselements 15
- 38: Innenkontur der Durchzugsöffnung
- 39: Außenkontur der Spurkettenstränge 6 in Längsrichtung 17
- 40: Schenkel des Kettenkreuzes
- 41: Kettenkreuz
- 42: Winkel
- 43: Ausbuchtungen
- 44: der Lauffläche 2 zugewandte Schmalseite des Verkürzungselements 15
- 46: äußere Schmalseite des Verkürzungselements 15
- 47: Höhe
- 48: Aufnahme
- 49: Köpfe
- 50: Mittenbereich des Sicherungselements 31
- 51: Dickenrichtung
- 52: Greifprofil

## Patentansprüche

1. Verkürzungselement (15) für Reifenketten (4) mit wenigstens zwei zumindest abschnittsweise in Umfangsrichtung (5) des Reifens (3) verlaufenden Spurkettensträngen (6), wobei das Verkürzungselement wenigstens eine Aufnahme (48) aufweist, in der die Spurkettenstränge in einer Sperrstellung (32) relativ zueinander in ihrer Längsrichtung (17) unverschieblich befestigbar sind, wobei die Aufnahme (48) wenigstens einen Sperrschlitz (18), in dem wenigstens ein Spurkettenstrang (6) in der Sperrstellung (32) aufnehmbar ist, und wenigstens eine Durchzugsöffnung (24) aufweist, und wobei der wenigstens eine Spurkettenstrang von der Sperrstellung in eine in der Durchzugsöffnung angeordnete Durchziehstellung (33) überführbar ist, in der die Außenkontur (39) des wenigstens einen Spurkettenstranges (6) in die Innenkontur (38) der Durchzugsöffnung einschreibbar ist, **dadurch gekennzeichnet, dass** der wenigstens eine Spurkettenstrang (6) in der Durchziehstellung (33) gegenüber der Sperrstellung (32) um einen vorbestimmten Drehwinkel (44) um die Längsrichtung (17) gedreht ist.

2. Verkürzungselement (15) nach Anspruch 1, **dadurch gekennzeichnet, dass** der Drehwinkel zwischen wenigstens etwa 20° und höchstens etwa 60° beträgt.

3. Verkürzungselement (15) nach einem der Ansprüche 1 oder 2, **dadurch gekennzeichnet, dass** die wenigstens zwei Sperrschlitze (18) vorgesehen und durch wenigstens eine gemeinsame Durchzugsöffnung (24) miteinander verbunden sind.

4. Verkürzungselement (15) nach Anspruch 3, **dadurch gekennzeichnet, dass** genau eine Durchzugsöffnung (24) zwischen den wenigstens zwei Sperrschlitzen (18) angeordnet ist.

5. Verkürzungselement (15) nach einem der Ansprüche 1 bis 4, **dadurch gekennzeichnet, dass** die Durchzugsöffnung (24) Ausbuchtungen (43) aufweist, die jeweils den Schenkeln (40) des von dem wenigstens einen Spurkettenstrang (6) gebildeten Kettenkreuzes (41) zugeordnet sind.

6. Verkürzungselement (15) nach Anspruch 5, **dadurch gekennzeichnet, dass** jeweils zwei Paare von sich bezüglich des wenigstens eines Sperrschlitzes (18) gegenüberliegenden Ausbuchtungen (43) vorgesehen sind.

7. Verkürzungselement (15) nach einem der Ansprüche 1 bis 6, **dadurch gekennzeichnet, dass** es im Wesentlichen als eine vorzugsweise längliche Platte ausgestaltet ist und dass sich der wenigstens eine Sperrschlitz (18) und die Durchzugsöffnung (24) in den Flachseiten (29) des Verkürzungselements (15) befinden.

8. Verkürzungselement (15) nach einem der Ansprüche 1 bis 7, **dadurch gekennzeichnet, dass** wenigstens ein Sicherungselement (31) vorgesehen ist, das in der Aufnahme (48) befestigbar ausgestaltet ist.

9. Verkürzungselement (15) nach Anspruch 8, **dadurch gekennzeichnet, dass** das Sicherungselement (31) formschlüssig mit der Aufnahme (48) in Eingriff bringbar ausgestaltet ist.

10. Verkürzungselement (15) nach Anspruch 8 oder 9, **dadurch gekennzeichnet, dass** das Sicherungselement (31) aus einem wenigstens abschnittsweise elastisch verformbaren Körper gebildet ist.

11. Verkürzungselement (15) nach einem der Ansprüche 8 bis 10, **dadurch gekennzeichnet, dass** das Sicherungselement (31) im Wesentlichen hantelförmig ausgestaltet ist und zwei Köpfe aufweist, deren Außenkontur größer ist als die Innenkontur der Aufnahme.

12. Verkürzungselement (15) nach einem der Ansprüche 8 bis 10, **dadurch gekennzeichnet, dass** das Sicherungselement (31) in Richtung zu dem wenigstens einen Sperrschlitz (18) unverschieblich in der Aufnahme (48) gehalten ist.

13. Reifenkette (4) mit einem Laufnetz (1), das wenigstens zwei Spurkettenstränge (6), die sich von jeweiligen quer zur Umfangsrichtung (5) voneinander beabstandeten ersten Haltestellen (8) zu jeweiligen zweiten Haltestellen (8) in Umfangsrichtung erstrecken, und wenigstens ein Verkürzungselement (15) aufweist, das zwischen den ersten und zweiten Haltestellen angeordnet ist und in dem die wenigstens zwei Spurkettenstränge in einer Sperrstellung (32) quer zur Umfangsrichtung voneinander beabstandet und in Längsrichtung (17) unverschieblich gehalten sind, wobei im Verkürzungselement (15) wenigstens eine Durchzugsöffnung (24) vorgesehen ist, in die der wenigstens eine Spurkettenstrang aus der Sperrstellung (32) bewegbar ist und in der der wenigstens eine Spurkettenstrang in seiner Längsrichtung (17) relativ zum wenigstens einen anderen Spurkettenstrang (6) beweglich ist, **dadurch gekennzeichnet, dass** der wenigstens eine Spurkettenstrang (6) in einer Durchziehstellung (33) gegenüber der Sperrstellung (32) um einen vorbestimmten Drehwinkel (44) um die Längsrichtung (17) gedreht ist.

14. Reifenkette (4) nach Anspruch 13, **dadurch gekennzeichnet, dass** das Verkürzungselement (15) nach einem der Ansprüche 1 bis 12 ausgebildet ist.

15. Reifenkette (4) nach Anspruch 13 oder 14, **dadurch gekennzeichnet, dass** im verkürzten Zustand sich wenigstens einer der Spurkettenstränge (6, 6a) straff und wenigstens ein anderer Spurkettenstrang (6, 6b) lose von der ersten Haltestelle (8) zum Verkürzungselement (15) und der wenigstens eine Spurkettenstrang (6, 6a) lose und der wenigstens eine andere Spurkettenstrang (6, 6b) straff vom Verkürzungselement (15) zur zweiten Haltestelle (8) erstreckt.

16. Reifenkette (4) nach einem der Ansprüche 13 bis 15, **dadurch gekennzeichnet, dass** zwischen den wenigstens zwei Spurkettensträngen (6) ein Sicherungselement (31) am Verkürzungselement (15) befestigt ist und dass das durch das Sicherungselement (31) eine Bewegung des wenigstens einen Spurkettenstranges (6) in die Durchzugsöffnung (24) blockiert ist.

## Claims

1. Shortening element (15) for tyre chains (4) with at least two track chain strands (6) running at least in segments in the circumferential direction (5) of the tyre (3), wherein the shortening element comprises at least one slot (48) in which the track chain strands are immovably fixable relative to each other in their longitudinal direction (17) in a blocked position (32), wherein the slot (48) comprises at least one blocking slit (18) in which at least one track chain strand (6) can be received in the blocked position (32), and at least one passage opening (24), and wherein the at least one track chain strand is transferrable from the blocked position into a passage position (33) arranged in the passage opening, in which the outer contour (39) of the at least one track chain strand (6) is insertable into the inner contour (38) of the passage opening, **characterised in that** the at least one track chain strand (6) in the passage position (33) is turned in relation to the blocked position (32) by a predefined rotation angle (44) about the longitudinal direction (17).

2. Shortening element (15) according to claim 1, **characterised in that** the rotation angle is between around 20° and maximum around 60°.

3. Shortening element (15) according to any one of claims 1 or 2, **characterised in that** the at least two blocking slits (18) are provided and are connected together by at least one common passage opening (24).

4. Shortening element (15) according to claim 3, **characterised in that** precisely one passage opening (24) is arranged between the at least two blocking slits (18).

5. Shortening element (15) according to any one of claims 1 to 4, **characterised in that** the passage opening (24) has recesses (43) which are each allocated to the legs (40) of the chain cross (41) formed by the at least one track chain strand (6).

6. Shortening element (15) according to claim 5, **characterised in that** in each case two pairs of recesses (43) are provided opposite each other in relation to the at least one blocking slit (18).

7. Shortening element (15) according to any one of claims 1 to 6, **characterised in that** it is substantially formed as a preferably oblong plate and that the at least one blocking slit (18) and the passage opening (24) are located in the flat sides (29) of the shortening element (15).

8. Shortening element (15) according to any one of claims 1 to 7, **characterised in that** at least one securing element (31) is provided which is adapted to be fixable in the slot (48).

9. Shortening element (15) according to claim 8, **characterised in that** the securing element (31) is adapted to be able to be brought into form-fit engagement with the slot (48).

10. Shortening element (15) according to claim 8 or 9, **characterised in that** the securing element (31) is formed from a body which is elastically deformable at least in segments.

11. Shortening element (15) according to any one of claims 8 to 10, **characterised in that** the securing element (31) is formed substantially dumb-bell shaped with two heads, the outer contour of which is greater than the inner contour of the slot.

12. Shortening element (15) according to any one of claims 8 to 10, **characterised in that** the securing element (31) is held in the slot (48) immovable in the direction towards the at least one blocking slit (18).

13. Tyre chain (4) with a tread mesh (1) comprising at least two track chain strands (6) which extend from respective first holding points (8) spaced apart transverse to the circumferential direction (5) to respective second holding points (8) in the circumferential direction, and at least one shortening element (15) which is arranged between the first and second holding points and in which the at least two track chain strands are held in a blocked position (32) spaced apart from each other transverse to the circumferential direction and immovable in the longitudinal direction (17), wherein in the shortening element (15) is provided at least one passage opening (24) into which the at least one track chain strand is movable from the blocked position (32) and in which the at least one track chain strand is movable in its longitudinal direction (17) relative to at least one other track chain strand (6), **characterised in that** the at least one track chain strand (6) in a passage position (33) is turned in relation to the blocked position (32) by a predefined rotation angle (44) about the longitudinal direction (17).

14. Tyre chain (4) according to claim 13, **characterised in that** the shortening element (15) is formed according to any one of claims 1 to 12.

15. Tyre chain (4) according to claim 13 or 14, **characterised in that** in shortened state, at least one of the track chain strands (6, 6a) extends tautly and at least one other track chain strand (6, 6b) loosely from the first holding point (8) to the shortening element (15), and the at least one track chain strand (6, 6a) extends loosely and the at least one other track chain strand (6, 6b) tautly from the shortening element (15) to the second holding point (8).

16. Tyre chain (4) according to any one of claims 13 to 15, **characterised in that** between the at least two track chain strands (6), a securing element (31) is attached to the shortening element (15) and that the securing element (31) blocks a movement of the at least one track chain strand (6) into the passage opening (24).

## Revendications

1. Élément de raccourcissement (15) pour chaînes de pneus (4), avec au moins deux brins pour bande de roulement (6) qui s'étendent au moins par endroits dans le sens circonférentiel (5) du pneu (3), étant précisé que l'élément de raccourcissement présente au moins un logement (48) dans lequel les brins de chaîne sont aptes à être fixés de manière fixe l'un par rapport à l'autre dans leur sens longitudinal (17), dans une position de blocage (32), que le logement (48) présente au moins une fente de blocage (18) dans laquelle au moins un brin de chaîne (6) est apte à être logé, dans la position de blocage (32), et au moins une ouverture de passage (24), et que le ou les brins de chaîne sont aptes à passer de la position de blocage à une position de passage (33) qui est disposée dans ladite ouverture de passage et dans laquelle le contour extérieur (39) du ou des brins de chaîne (6) est apte à s'inscrire dans le contour intérieur (38) de l'ouverture de passage, **caractérisé en ce que** le ou les brins de chaîne (6), dans la position de passage (33), sont tournés par rapport à la position de blocage (32) suivant un angle de rotation (44) prédéfini, autour du sens longitudinal (17).

2. Élément de raccourcissement (15) selon la revendication 1, **caractérisé en ce que** l'angle de rotation est d'environ 20° au minimum et d'environ 60° au maximum.

3. Élément de raccourcissement (15) selon l'une des revendications 1 ou 2, **caractérisé en ce qu'**au moins deux fentes de blocage (18) sont prévues et sont reliées par au moins une ouverture de passage commune (24).

4. Élément de raccourcissement (15) selon la revendication 3, **caractérisé en ce qu'**il est prévu exactement une ouverture de passage (24) entre lesdites fentes de blocage (18).

5. Élément de raccourcissement (15) selon l'une des revendications 1 à 4, **caractérisé en ce que** l'ouverture de passage (24) présente des creux (43) qui sont associés respectivement aux branches (40) du croisement de chaîne (41) formé par le ou les brins de chaîne (6).

6. Élément de raccourcissement (15) selon la revendication 5, **caractérisé en ce qu'**il est prévu à chaque fois deux paires de creux (43) qui se font face par rapport à la ou aux fentes de blocage (18).

7. Élément de raccourcissement (15) selon l'une des revendications 1 à 6, **caractérisé en ce qu'**il est conçu globalement comme une plaque de préférence oblongue et **en ce que** la ou les fentes de blocage (18) et l'ouverture de passage (24) se trouvent dans les côtés plats (29) de l'élément de raccourcissement (15).

8. Élément de raccourcissement (15) selon l'une des revendications 1 à 7, **caractérisé en ce qu'**il est prévu au moins un élément de blocage (31) qui est conçu pour pouvoir être fixé dans le logement (48).

9. Élément de raccourcissement (15) selon la revendication 8, **caractérisé en ce que** l'élément de blocage (31) est conçu pour pouvoir être accouplé par complémentarité de forme au logement (48).

10. Élément de raccourcissement (15) selon la revendication 8 ou 9, **caractérisé en ce que** l'élément de blocage (31) se compose d'un corps déformable élastiquement au moins par endroits.

11. Élément de raccourcissement (15) selon l'une des revendications 8 à 10, **caractérisé en ce que** l'élément de blocage (31) a globalement la forme d'un haltère et présente deux têtes dont le contour extérieur est plus grand que le contour intérieur du logement.

12. Élément de raccourcissement (15) selon l'une des revendications 8 à 10, **caractérisé en ce que** l'élément de blocage (31) est retenu fixe dans le logement (48) dans le sens de la ou des fentes de blocage (18).

13. Chaîne de pneu (4) avec un filet de roulement (1) qui comporte au moins deux brins de chaîne pour bande de roulement (6) qui s'étendent dans le sens circonférentiel de premiers points d'attache (8) respectifs, espacés l'un de l'autre transversalement par rapport au sens circonférentiel (5), jusqu'à des seconds points d'attache (8) respectifs, et au moins un élément de raccourcissement (15) qui est disposé entre les premiers et seconds points d'attache et dans lequel les deux brins de chaîne ou plus sont espacés l'un de l'autre transversalement par rapport au sens circonférentiel, dans une position de blocage (32), et sont retenus fixes dans le sens longitudinal, étant précisé qu'il est prévu dans l'élément de raccourcissement (15) au moins une ouverture de passage (24) dans laquelle le ou les brins de chaîne sont aptes à être amenés, à partir de la position de blocage (32), et dans laquelle le ou les brins de chaîne sont mobiles dans leur sens longitudinal (17) par rapport à au moins un autre brin de chaîne (6), **caractérisée en ce que** le ou les brins de chaîne (6), dans une position de passage (33), sont tournés par rapport à la position de blocage (32) suivant un angle de rotation (44) prédéfini, autour du sens longitudinal (17).

14. Chaîne de pneu (4) selon la revendication 13, **caractérisé en ce que** l'élément de raccourcissement (15) est conçu selon l'une des revendications 1 à 12.

15. Chaîne de pneu (4) selon la revendication 13 ou 14, **caractérisé en ce qu'**en position raccourcie, l'un au moins des brins de chaîne (6, 6a) s'étend de manière tendue et au moins un autre brin de chaîne (6, 6b) s'étend de manière lâche du premier point d'attache (8) jusqu'à l'élément de raccourcissement (15), et l'un au moins des brins de chaîne (6, 6a) s'étend de manière lâche et au moins un autre brin de chaîne (6, 6b) s'étend de manière tendue de l'élément de raccourcissement (15) au second point d'attache (8).

16. Chaîne de pneu (4) selon l'une des revendications 13 à 15, **caractérisé en ce qu'**un élément de blocage (31) est fixé à l'élément de raccourcissement (15) entre les deux brins de chaîne (6) ou plus, et **en ce que** cet élément de blocage (31) empêche le ou les brins de chaîne (6) d'arriver dans l'ouverture de passage (24).
